# EUROPEAN PATENT APPLICATION

(11) **EP 2 423 605 A1**
(43) Date of publication of application: **29.02.2012**
(21) Application number: 10382235.9
(22) Date of filing: 24.08.2010
(51) Int. Cl.: F24D 3/08, F24D 3/18, F24D 11/02, F24D 17/02

(54) **Combined cold, heat and domestic hot water (DHW) climatization system**

(71) Applicant: C.P. Comercial Prestcold, S.A., 28850 Torrejon de Ardoz (ES)
(72) Inventor: Garcia Lozano, Antonio, 28850 TORREJON DE ARDOZ (ES)
(74) Representative: Manzano Cantos, Gregorio

(57) **Abstract**

The invention relates to a combined cold, heat and domestic hot water (DHW) climatization system comprising a single unique internal unit consisting of two unique heat exchangers, a refrigerant/water exchanger and another water/water exchanger with respective DHW and climatization tanks, in which the hydraulic circuits withstand very low pressure effects.

## Description

### Object of the Invention

The invention relates to a climatization system of the type which is typically used to provide cooling in summer, heating in winter and domestic hot water and which substitutes the so-called heat pump of said climatizer and which is essentially and fundamentally integrated in a single internal unit, having the necessary hydraulic installation, the corresponding tanks and the set of exchangers in which the solution lies for said single internal unit to be able to manage and supply the listed functions, the rest of the installation remaining outside or in the external equipment, which prevents the well-known installation and handling drawbacks when the integration proposed by the invention is not possible.

The invention has the great advantage of having solved in a simple and much more cost-effective manner that of a climatizer combining in a single internal unit the two necessary tanks and that of two exchangers the function of which is water-water heat and another refrigerant-water heat exchanger which enables a substantial use of the energy due to the fact that the simple cooling of the water allows the cooling conversion, an unknown fact, since the so-called air conditioning or cooling, as contained in its definition, consists of cooling the environmental air, making it circulate through a typical cooling plate or circuit and the water refrigerant-heat exchanger of which is connected to the external equipment.

### Background of the Invention

In traditional air-water heat pumps which were available on the market until recently, the condenser and the evaporator always perform the same function: the former heats the water and the latter cools it, therefore, in order to change the winter cycle to the summer cycle, such change had to be done externally to the machine by means of a set of manual shutoff valves or two- or thee-way electrovalves to carry the hot or cold water in the internal circuit, and therefore, to do the opposite in the external circuit. This involves making relatively complicated installations on site with the consequent operation and maintenance problems. Among other things, in most cases condensers and evaporators work in an open or closed circuit depending on the season and, consequently, on their exposure to more dirt and corrosion.

The innovation has allowed internally using reversible air-water heat pumps by means of the use of 4-way valves for the refrigerating cycle change such that two freon water exchangers must be mentioned, one for the internal hydraulic circuit (dwelling) and the other for the external thermal use hydraulic circuit. Thus, the internal exchanger will be a condenser when it has to heat the water (heating and DHW) and an evaporator when it has to cool it, but it will always work in the same closed circuit. Evidently, the external exchanger will work in a manner opposite to the internal exchanger but also without changing the type or circuit, which is always open or closed, according to the chosen feeding system.

The invention is based on patent ES 2 263 397 B1 CP Comercial Prestcold, S.A. "SISTEMA BOMBA DE CALOR PARTIDA AIRE-AGUA CON PRODUCCIÓN DE AGUA CALIENTE SANITARIA" (Split air-water heat pump with production of domestic hot water) and hot or cold water for climatization, which incorporates a compressor which, through a three-way reversible valve, supplies refrigerant fluid at high pressure and temperature to an exchanger to produce domestic hot water and accumulate it in a tank integrated in the system or an exchanger for climatization and accumulate the water thereof in another buffer tank integrated in the system, said exchangers being connected in parallel and both of them being interconnected by means of a set of valves which make the operation of both independent and which are connected to a refrigerant subcooler and to a fourth refrigerant/air exchanger with its corresponding ventilation assembly.

### Description of the Invention

The novelty of the invention lies in the internal unit which, by the traditional means, is joined with the external unit but made independent for its autonomous operation without the need to have to access or handle the external installation which, in current equipment, is the greatest use drawback.

The internal unit consists in this case of two exchangers, it being usual for one of said exchangers to be in the external unit, in the case of the invention they are grouped together, making the advantage mentioned in the previous paragraph possible, being a water-water heat exchanger for supplying domestic hot water (DHW) through the corresponding installations and essentially another refrigerant-water heat exchanger for climatization and air conditioning, where the refrigerant carries out the evaporator/condenser effect to transform the heat into a cooling/heating effect, simply and easily with excellent energy savings and with a considerable reduction of the pressures.

A broader idea of the features of the invention is provided below, upon making reference to the sheets of drawings attached to this specification in a schematic manner and only by way of example, depicting the preferred and essential details of the invention.

In the drawings:

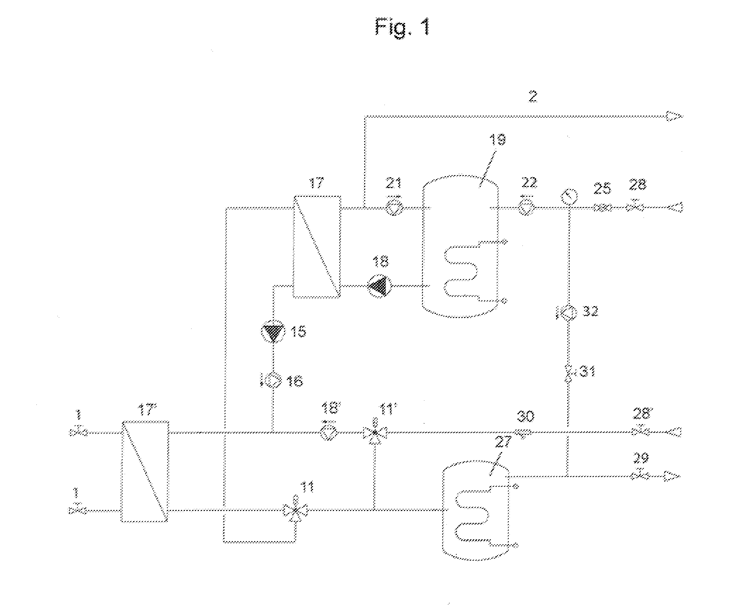

Figure 1 is a schematic view of the circuit of the internal unit according to the invention.

### Preferred Embodiment

A preferred embodiment of the invention is depicted by the simple circuit of the depicted illustrations and consists of:
1.- Refrigerating connections with the external unit.
2.- Domestic hot water (DHW) outlet
11.- Three-way changeover valve activated as an electric solenoid for carrying out the change from climatization to DHW.
11'.- Three-way changeover valve activated as an electric solenoid for the recirculation of the climatization circuit.
15.- Water recirculating pump.
16.- Check valve
17.- Water/water heat exchanger.
17'.- Refrigerant/water heat exchanger
18.- Water recirculating pump
18'.- Check valve
19.- Tank (container) for the accumulation of domestic hot water (DHW)
21.- Check valve
22.- Check valve
25.- Automatic filling unit with water pressure regulation
27.- Climatization (heating and cooling) water inertia tank (container)
28.- Distribution system water inlet shutoff cock
28'- Climatization water return shutoff cock.
29- Climatization water drive shutoff cock.
30.- Climatization circuit water flow breaker
31.- Climatization water circuit filling cock
32.- Check valve.

The circuit of Figure 1 shows in an elemental schematic manner the conditions of the refrigerant (1) with the external unit and with the refrigerant/water heat exchanger (17') which is in turn connected with the internal circuit through the water drive and return. The water return has the following elements connected in an interlinear manner: Climatization water return shutoff cock (28'), flow breaker (30), three-way changeover valve (11') activated as an electric solenoid for the recirculation of the climatization circuit and check valve (18'). The water drive circuit consists of the following components connected in an interlinear manner: three-way changeover valve (11) activated as an electric solenoid for carrying out the change from climatization to domestic hot water, the inertia tank (27) and the shutoff cock (29); and which provides hot and cold water to cover the energy needs of the dwelling with the use of renewable energy which does not require fossil fuel consumption.

This climatization water drive circuit has a bypass to the DHW circuit through the three-way changeover valve (11) connecting with the water/water heat exchanger which directly produces domestic hot water (DHW) for its consumption (2) or for the DHW accumulator (19) through the circuit integrated by the recirculation pump (18) and the check valve (21). The recirculation pump (15) and the check valve (16) complete the return of the water/water exchanger (17) to the refrigerant/water exchanger (17').

The climatization water circuit is filled through the distribution system water inlet shutoff cock (28), the automatic filling unit (25) with water pressure regulation, the check valve (32) and the climatization water circuit filling cock (31).

The distribution system water enters the DHW accumulator (19) through the shutoff valve (28), the automatic filling unit (25) with pressure regulation and the check valve (22).

Having sufficiently described the nature of the invention, it is stated for the relevant purposes that such invention is not limited to the exact details of this description, but rather the modifications that are considered to be appropriate will be introduced therein, provided that they do not alter the essential features thereof which are claimed below.

## Claims

1. A combined cold, heat and domestic hot water (DHW) climatization system with an external unit and another internal unit which are provided with several heat exchangers, **characterized in that** it comprises a single internal unit consisting of two unique heat exchangers, a refrigerant/water exchanger (17') and another water/water exchanger (17) with the DHW accumulation tank or container (19) and a climatization (heating and cooling) inertia tank (27) and which provides hot and cold water to cover the energy needs of the dwelling with the use of renewable energy while the water circuits of the internal unit work with reduced pressures, not exceeding in any case 7 bar.

2. The cold, heat and domestic hot water (DHW) climatization system according to the previous claim, the mentioned circuit of the internal unit being **characterized in that** it is connected passing through (11) and (11'), the former being the three-way changeover valve (11) activated like an electric solenoid and the latter being the three-way changeover valve (11') also activated like an electric solenoid, and having an interlinear connection with the climatization water inertia tank (27) with return (29) and a bypass connecting with the DHW water/water exchanger (17) equipped with a DHW accumulation tank (19) with its corresponding bypass to the DHW outlet circuit for consumption and its corresponding check valves (21) and (22) and the distribution system water inlet shutoff cock, with a conduit connected to the mentioned return (29) which has a filling cock (31) also for the climatization circuit inertia tank (27).

3. The combined cold, heat and domestic hot water (DHW) climatization system according to claim 1, the mentioned low pressure effect being **characterized in that** the pressures in the hydraulic circuits are considerably reduced, passing from high pressures < 42 bar to other less severe pressures <7 bar, making the circuit much more stable.
